# EUROPÄISCHE PATENTANMELDUNG

(11) **EP 3 093 174 A1**
(43) Veröffentlichungstag der Anmeldung: **16.11.2016**
(21) Anmeldenummer: 15167111.2
(22) Anmeldetag: 11.05.2015
(51) Int. Cl.: B60K 6/365, B60K 6/387, B60K 6/48, B60K 6/547, F16H 3/66, F16H 37/06, F16H 3/44

(54) **GETRIEBE FÜR EIN KRAFTFAHRZEUG UND HYBRIDANTRIEBSSTRANG**

(71) Anmelder: ZF Friedrichshafen AG, 88046 Friedrichshafen (DE)
(72) Erfinder: Ziemer, Peter, 88069 Tettnang (DE); Beck, Stefan, 88097 Eriskirch (DE); Brehmer, Martin, 88069 Tettnang (DE); Horn, Matthias, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88131 Lindau (DE); Griesmeier, Uwe, 88677 Markdorf (DE); Kuberczyk, Raffael, 88212 Ravensburg (DE)

(57) **Zusammenfassung**

Getriebe (G) für ein Kraftfahrzeug, mit einer Antriebswelle (GW1), einer Abtriebswelle (GW2), einem Vorschaltradsatz (VRS), einem Hauptradsatz (HRS), einer elektrischen Maschine (EM) mit einem drehbaren Rotor (R) und einem drehfesten Stator (S), sowie zumindest drei Schaltelemente (A, B, C, D, E), wobei der Hauptradsatz (HRS) durch einen ersten und einen zweiten Planetenradsatz (P1, P2) gebildet ist, welche zusammen insgesamt vier in Drehzahlordnung als erste, zweite, dritte, vierte Welle bezeichnete Wellen (W1, W2, W3, W4) aufweisen, wobei der Vorschaltradsatz (VRS) dazu eingerichtet ist, an einer seiner Wellen eine zur Drehzahl (n0) der Antriebswelle (GW1) erhöhte Drehzahl (n1) und an einer weiteren seiner Wellen eine zur Drehzahl (n0) der Antriebswelle (GW1) verringerte Drehzahl (n2) bereitzustellen, wobei zwischen den Drehzahlen (n0, n1, n2) feste Übersetzungsverhältnisse bestehen, wobei jene Welle des Vorschaltradsatzes (VRS), welche dazu eingerichtet ist die verringerte Drehzahl (n2) bereitzustellen, ein Bestandteil eines schaltbaren ersten Leistungspfades zu einer ersten der vier Wellen (W1, W2, W3, W4) des Hauptradsatzes (HRS) ist, wobei die Antriebswelle (GW1) ein Bestandteil eines schaltbaren zweiten Leistungspfades zu einer zweiten der vier Wellen (W1, W2, W3, W4) des Hauptradsatzes (HRS) ist, und wobei durch selektives paarweises Eingreifen der Schaltelemente (A, B, C, D, E) die Drehzahlverhältnisse der vier Wellen (W1, W2, W3, W4) des Hauptradsatzes (HRS) bestimmbar sind, wodurch eine Mehrzahl von schaltbaren Vorwärtsgängen (G1-G6) zwischen der Antriebswelle (GW1) und der Abtriebswelle (GW2) erzeugbar sind,

## Beschreibung

Die Erfindung betrifft ein Getriebe für ein Kraftfahrzeug, mit einer Antriebswelle, einer Abtriebswelle, einem Vorschaltradsatz, einem Hauptradsatz, einer elektrische Maschine mit einem drehbaren Rotor und einem drehfesten Stator, sowie zumindest drei Schaltelemente. Die Erfindung betrifft außerdem einen Hybridantriebsstrang für ein Kraftfahrzeug.

Ein Getriebe bezeichnet hier insbesondere ein mehrgängiges Getriebe, bei dem eine Vielzahl von Gängen, also Übersetzungsverhältnisse zwischen der Antriebswelle und der Abtriebswelle, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Patentanmeldung DE 10 2013 223 427 A1 der Anmelderin beschreibt ein Last-schaltgetriebe für einen Hybridantriebsstrang, umfassend einen Vorschaltradsatz und einen Hauptradsatz welcher je aus zwei doppelt miteinander gekoppelten Planetenradsätzen besteht. Der Vorschaltradsatz ist dazu eingerichtet zwei im Vergleich zur Drehzahl der Getriebeeingangswelle verringerte Drehzahlen bereitzustellen. Der Rotor der elektrischen Maschine ist dabei ständig mit der in Drehzahlordnung ersten Welle des Hauptradsatzes verbunden.

Die Patentanmeldung DE 10 2013 223 426 A1 der Anmelderin beschreibt ein Getriebe für einen Hybridantriebsstrang, umfassend einen Vorschaltradsatz und einen Hauptradsatz welcher je aus zwei doppelt miteinander gekoppelten Planetenradsätzen besteht. Der Vorschaltradsatz ist dazu eingerichtet eine im Vergleich zur Drehzahl der Getriebeeingangswelle erhöhte Drehzahl und eine im Vergleich zur Drehzahl der Getriebeeingangswelle verringerte Drehzahl bereitzustellen. Der Rotor der elektrischen Maschine ist dabei ständig mit der in Drehzahlordnung ersten Welle des Hauptradsatzes verbunden.

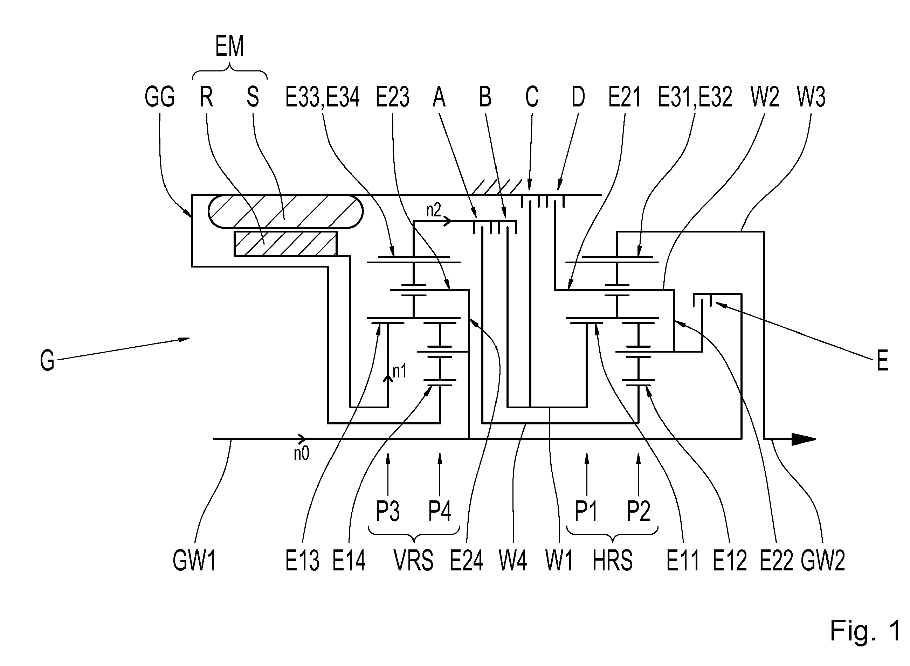

In beiden im Stand der Technik bekannten Getrieben ist der Rotor der elektrischen Maschine an der in Drehzahlordnung ersten Welle des Hauptradsatzes angebunden. In den in Fig. 1 der oben genannten Patentanmeldungen dargestellten Drehzahlplänen ist deutlich erkennbar, dass die Drehzahl der ersten Welle des Hauptradsatzes regelmäßig nur geringe Drehzahlen annimmt, oder sogar drehfest festgesetzt ist. Ist diese erste Welle drehfest festgesetzt, so kann sie kein Drehmoment abgeben oder aufnehmen. Bei geringer Drehzahl dieser ersten Welle muss die elektrische Maschine entsprechend groß dimensioniert werden, um das für die Soll-Leistung erforderliche Drehmoment abgeben zu können. Dies ist unerwünscht, da die elektrische Maschine im Fahrbetrieb möglichst in jedem Gang zur Abgabe und Aufnahme von Leistung zur Verfügung stehen soll, beispielsweise zur Rekuperation. Dabei soll die elektrische Maschine möglichst kleine Abmessungen aufweisen.

Es ist daher Aufgabe der Erfindung ein Getriebe für ein Kraftfahrzeug bereitzustellen, welche eine kompakt bauende elektrische Maschine aufweist, die in jedem Gang des Getriebes zur Aufnahme und Abgabe von Leistung zur Verfügung steht.

Die Aufgabe wird gelöst durch die Merkmale des Patentanspruchs 1. Vorteilhafte Weiterbildungen ergeben sich aus den abhängigen Patentansprüchen, der Beschreibung und aus den Figuren.

Das Getriebe weist einen Vorschaltradsatz, einen Hauptradsatz, eine elektrische Maschine mit einem drehbaren Rotor und einem drehfesten Stator, sowie zumindest drei Schaltelemente auf.

Der Hauptradsatz weist einen ersten und einen zweiten Planetenradsatz mit insgesamt vier in Drehzahlordnung als erste, zweite, dritte und vierte Welle bezeichnete Wellen auf. Der Hauptradsatz ist daher als ein sogenanntes Zwei-Steg-Vier-Wellen-Getriebe aufgebaut. Unter einem Zwei-Steg-Vier-Wellen-Getriebe ist ein Planetengetriebe zu verstehen, das aus zwei über genau zwei Koppelwellen kinematisch miteinander gekoppelten Einzel-Planetenradsätzen gebildet ist und bei dem vier seiner Elemente ("Wellen") für andere Getriebeelemente frei zugänglich sind. Eine Koppelwelle ist dabei als ständige mechanische Verbindung zwischen einem Element - also Sonnenrad oder Steg oder Hohlrad - des ersten Einzel-Planetenradsatzes mit einem Element - also Sonnenrad oder Steg oder Hohlrad - des zweiten Einzel-Planetenradsatzes definiert. Die Anzahl der Einzel-Planetenradsätze und die Anzahl der freien Wellen sind nicht über das optische Erscheinungsbild des Getriebes definiert, sondern über dessen Kinematik. Zur graphischen Darstellung der Kinematik des Getriebes wird üblicherweise ein Drehzahlplan des Getriebes verwendet, beispielsweise den aus der Getriebelehre bekannten Kutzbachplan.

Der Vorschaltradsatz ist dazu eingerichtet, an einer seiner Wellen eine zur Drehzahl der Antriebswelle erhöhte Drehzahl und an einer weiteren seiner Wellen eine zur Drehzahl der Antriebswelle verringerte Drehzahl bereitzustellen. Die Bereitstellung der unterschiedlichen Drehzahlen erfolgt rein mechanisch, wodurch die Übersetzungsverhältnisse zwischen den Wellen des Vorschaltradsatzes fest vorgegeben sind. Dies wird beispielhaft dadurch gelöst, dass der Vorschaltradsatz als ein Zwei-Steg-Vier-Wellen-Getriebe ausgebildet ist, wobei eine in Drehzahlordnung als erste gereihte Welle des Vorschaltradsatzes ständig drehfest festgesetzt ist. Die in Drehzahlordnung als dritte gereihte Welle des Vorschaltradsatzes ist ständig mit der Antriebswelle verbunden. Die in Drehzahlordnung als zweite gereihte Welle des Vorschaltradsatzes stellt die im Vergleich zur Antriebswelle reduzierte Drehzahl bereit. Die in Drehzahlordnung als vierte gereihte Welle des Vorschaltradsatzes stellt die im Vergleich zur Antriebswelle erhöhte Drehzahl bereit. Diese Ausbildung des Vorschaltradsatzes ist lediglich beispielhaft anzusehen. Alternativ könnte der Vorschaltradsatz auch durch zwei Stirnradstufen gebildet sein, welche an zwei Vorgelegewellen die erhöhte, bzw. verringerte Drehzahl bereitstellen.

Jene Welle des Vorschaltradsatzes, welche dazu eingerichtet ist die im Vergleich zur Drehzahl der Antriebswelle verringerte Drehzahl bereitzustellen, bildet einen Bestandteil eines schaltbaren ersten Leistungspfades zu einer ersten der vier Wellen des Hauptradsatzes. Die Antriebswelle selbst ist Bestandteil eines schaltbaren zweiten Leistungspfades zu einer zweiten der vier Wellen des Hauptradsatzes. In anderen Worten ist eines der zumindest drei Schaltelemente zwischen einer ersten der vier Hauptradsatzwellen und jener Welle des Vorschaltradsatzes angeordnet, welche die verringerte Drehzahl bereitstellt. Ein weiteres der zumindest drei Schaltelemente ist direkt zwischen der Antriebswelle und einer zweiten der vier Hauptradsatzwellen angeordnet. Erster und zweiter Leistungspfad sind schaltbar. Ist das dem Leistungspfad zugeordnete Schaltelement geöffnet, so kann dieser Leistungspfad keine Leistung übertragen.

Durch selektives paarweises Eingreifen der Schaltelemente sind die Drehzahlverhältnisse der vier Hauptradsatzwellen bestimmbar. Dadurch sind eine Mehrzahl von schaltbaren Vorwärtsgängen zwischen der Antriebswelle und der Abtriebswelle erzeugbar. In anderen Worten sind in jedem Vorwärtsgang genau zwei Schaltelemente geschlossen. Durch Schließen von zwei Schaltelementen sind die Drehzahlverhältnisse der vier Radsatzwellen zueinander bestimmt.

Erfindungsgemäß ist der Rotor der elektrischen Maschine ständig mit jener Welle des Vorschaltradsatzes verbunden, welche dazu eingerichtet ist die im Vergleich zur Drehzahl der Antriebswelle erhöhte Drehzahl bereitzustellen. Dadurch ergibt sich eine feste, gangunabhängige Übersetzung zwischen der Antriebswelle und dem Rotor der elektrischen Maschine, wobei der Rotor stets eine höhere Drehzahl aufweist als die Antriebswelle. Somit kann der Rotor zur Erzeugung oder Aufnahme einer Soll-Leistung mit einer höheren Drehzahl betrieben werden. Dies ermöglicht eine kleinere Bauweise der elektrischen Maschine. Da der Rotor mit einer Vorschaltradsatzwelle ständig verbunden ist, welche ein festes Übersetzungsverhältnis zur Antriebswelle hat, weist der Rotor stets dann eine Drehzahl auf wenn auch die Antriebswelle eine Drehzahl aufweist. Somit ist gewährleistet, dass der Rotor im Fahrbetrieb in jedem Gang eine Drehzahl aufweist, und damit zur Abgabe und Aufnahme von Leistung zur Verfügung steht.

Vorzugsweise weist das Getriebe zur Erzeugung der Vorwärtsgänge insgesamt fünf Schaltelemente auf. Die erste Welle des Hauptradsatzes ist über das dritte der fünf Schaltelemente drehfest festsetzbar, indem die erste Welle über das dritte Schaltelement mit einem Gehäuse oder einem anderen drehfesten Bauelement des Getriebes verbunden wird. Darüber hinaus ist die erste Welle des Hauptradsatzes über das zweite der fünf Schaltelemente mit jener Welle des Vorschaltradsatzes verbindbar, an der die im Vergleich zur Drehzahl der Antriebswelle verringerte Drehzahl bereitgestellt ist. Die zweite Welle des Hauptradsatzes ist über das vierte der fünf Schaltelemente drehfest festsetzbar, indem die zweite Welle über das vierte Schaltelement mit dem Gehäuse oder einem anderen drehfesten Bauelement des Getriebes verbunden wird. Darüber hinaus ist die zweite Welle des Hauptradsatzes über das fünfte der fünf Schaltelemente mit der Antriebswelle verbindbar. Die dritte Welle des Hauptradsatzes ist mit der Abtriebswelle des Getriebes ständig verbunden. Die vierte Welle des Hauptradsatzes ist über das erste der fünf Schaltelemente entweder mit der Antriebswelle oder mit jener Welle des Vorschaltradsatzes verbindbar, an der die im Vergleich zur Drehzahl der Antriebswelle verringerte Drehzahl bereitgestellt ist. Diese Zuordnung der Schaltelemente zwischen Hauptradsatzwellen, Vorschaltradsatzwelle, Antriebswelle und Gehäuse erlaubt die Ausbildung von zumindest sechs gruppenschaltungsfreien Vorwärtsgängen, und ist damit für die Anwendung im Kraftfahrzeug besonders geeignet.

Durch selektives Betätigen der fünf Schaltelemente sind zumindest sechs Vorwärtsgänge zwischen der Antriebswelle und der Abtriebswelle automatisiert schaltbar. Der erste Vorwärtsgang wird durch Schließen des ersten Schaltelements und des vierten Schaltelements gebildet. Der zweite Vorwärtsgang wird durch Schließen des ersten Schaltelements und des dritten Schaltelements gebildet. Der dritte Vorwärtsgang wird durch Schließen des ersten Schaltelements und des zweiten Schaltelements gebildet. Der vierte Vorwärtsgang wird durch Schließen des ersten Schaltelements und des fünften Schaltelements gebildet. Der fünfte Vorwärtsgang wird durch Schließen des zweiten Schaltelements und des fünften Schaltelements gebildet. Der sechste Vorwärtsgang wird durch Schließen des dritten Schaltelements und des fünften Schaltelements gebildet. Durch diese Zuordnung des ersten bis fünften Schaltelements zu den einzelnen Vorwärtsgängen wird, bei geeigneter Wahl der Standgetriebeübersetzung der Planetenradsätze des Hauptradsatzes und der Übersetzungsverhältnisse des Vorschaltradsatzes, eine für die Anwendung im Kraftfahrzeug gut geeignete Übersetzungsreihe erzielt. Zudem weisen zwei benachbarte Gänge stets ein Schaltelement auf, das in beiden diesen Gängen geschlossen ist. Bei einem Schaltvorgang in einen benachbarten Gang muss daher nur ein Schaltelement geöffnet und ein Schaltelement geschlossen werden. Dies vereinfacht den Schaltvorgang und verkürzt die Schaltdauer. Zudem ermöglicht dieses Schaltschema, dass nicht gleichzeitig betätigte Schaltelemente durch einen doppeltwirkenden Aktuator betätigt werden, beispielsweise das vierte und fünfte Schaltelement.

Gemäß einer Ausführungsform ergibt sich durch Schließen des zweiten Schaltelements und des vierten Schaltelements ein Rückwärtsgang zwischen Antriebswelle und Abtriebswelle. Der Rückwärtsgang ist nur optional vorgesehen, da ein Rückwärtsgang auch durch Betrieb der elektrischen Maschine entgegen einer Vorzugsdrehrichtung und Einlegen eines Vorwärtsganges gebildet werden könnte. Steht ein Betrieb der elektrischen Maschine allerdings nicht zur Verfügung, so ist ein derart mechanisch ausbildbarer Rückwärtsgang für die Funktionalität des Kraftfahrzeugs von Vorteil.

Vorzugsweise ist das erste Schaltelement als formschlüssiges Schaltelement, ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Beispielsweise kann das erste Schaltelement als Klauen-Schaltelement ausgeführt sein, welches auch ohne eine Synchronisiereinrichtung ausgebildet sein kann. Durch die im geöffneten Zustand geringen Schleppverluste wird der Wirkungsgrad des Getriebes weiter verbessert, besonders da das erste Schaltelement lediglich im ersten bis vierten Vorwärtsgang des Kraftfahrzeugs geschlossen ist. Das erste Schaltelement ist daher bei Betrieb des Getriebes in hohen Gängen, beispielsweise bei einer Autobahnfahrt, überwiegend geöffnet.

Alternativ oder ergänzend dazu kann auch das vierte Schaltelement als formschlüssiges Schaltelement, insbesondere als Klauenschaltelement ausgebildet sein. Auch das vierte Schaltelement ist bei Betrieb des Getriebes zu einem überwiegenden Anteil geöffnet, da es nur im ersten Vorwärtsgang und im optional vorgesehenen Rückwärtsgang geschlossen ist. Daher verbessert die Ausbildung des vierten Schaltelements als formschlüssiges Schaltelement den Wirkungsgrad des Getriebes ohne die Schaltdynamik negativ zu beeinflussen. Bei einem Schaltvorgang zwischen Rückwärtsgang und erstem Vorwärtsgang bleibt das vierte Schaltelement geschlossen. Somit wird dieser sensible Schaltvorgang durch die Ausbildung des vierten Schaltelements als formschlüssiges Schaltelement nicht beeinträchtigt.

Gemäß einer Ausführungsform weist der Vorschaltradsatz einen dritten und vierten Planetenradsatz auf, welche einen Ravigneaux-Radsatz mit zusammengefasstem Hohlrad bilden. Ein Ravigneaux-Radsatz bildet ein Zwei-Steg-Vier-Wellen-Getriebe und besteht aus zwei Planetenradsätzen, wobei einer der Planetenradsätze als Minus-Radsatz und der andere Planetenradsatz als Plus-Radsatz ausgebildet ist. Der Steg des Minus-Radsatz ist mit dem Steg des Plus-Radsatzes ständig verbunden, wodurch ein gemeinsamer Steg gebildet wird. In der Ausführung mit zusammengefasstem Hohlrad kämmen die äußeren Planetenräder des als Plus-Radsatz ausgebildeten Planetenradsatzes und die Planetenräder des als Minus-Radsatz ausgebildeten Planetenradsatzes mit dem gleichen Hohlrad. Ein Ravigneaux-Radsatz zeichnet sich durch einen hohen Wirkungsgrad, geringen Bauraumbedarf und eine einfache Baubarkeit aus, und ist somit für die gegenständliche Anwendung besonders geeignet. Ein Sonnenrad des als Plus-Radsatz ausgeführten vierten Planetenradsatzes ist dabei ständig drehfest festgesetzt, indem das Sonnenrad mit dem Gehäuse oder mit einem anderen drehfesten Bauelement des Getriebes ständig verbunden ist. Der gemeinsame Steg des dritten und vierten Planetenradsatzes ist ständig mit der Antriebswelle verbunden. Ein Sonnenrad des als Minus-Radsatz ausgebildeten dritten Planetenradsatzes ist mit dem Rotor der elektrischen Maschine ständig verbunden. Das zusammengefasste Hohlrad des dritten und vierten Planetenradsatzes ist Bestandteil jener Vorschaltradsatzwelle, welche dazu eingerichtet ist die verringerte Drehzahl bereitzustellen. Diese Ausbildung des Vorschaltradsatzes zeichnet sich durch eine gute Zugänglichkeit zu den Vorschaltradsatzwellen aus.

Gemäß einer weiteren Ausführungsform ist der Vorschaltradsatz als Ravigneaux-Radsatz mit zusammengefasstem Sonnenrad ausgebildet. Dabei kämmen die inneren Planetenräder des als Plus-Radsatz ausgebildeten vierten Planetenradsatzes und die Planetenräder des als Minus-Radsatz ausgebildeten dritten Planetenradsatzes mit dem gleichen Sonnenrad. Das zusammengefasste Sonnenrad des dritten und vierten Planetenradsatzes ist dabei ständig drehfest festgesetzt, indem es mit dem Gehäuse oder mit einem anderen drehfesten Bauelement des Getriebes ständig drehfest verbunden ist. Ein Hohlrad des als Plus-Radsatz ausgebildeten vierten Planetenradsatzes ist Bestandteil jener Vorschaltradsatzwelle, welche dazu eingerichtet ist die verringerte Drehzahl bereitzustellen. Der gemeinsame Steg des dritten und vierten Planetenradsatzes ist ständig mit der Antriebswelle verbunden. Ein Hohlrad des als Minus-Radsatz ausgebildeten dritten Planetenradsatzes ist ständig mit dem Rotor der elektrischen Maschine verbunden. Auch diese Ausbildung des Vorschaltradsatzes zeichnet sich durch eine gute Zugänglichkeit zu den Vorschaltradsatzwellen aus.

Gemäß einer weiteren Ausführungsform sind der dritte und vierte Planetenradsatz des Vorschaltradsatzes durch Minus-Radsätze gebildet, welche an Steg und Hohlrad miteinander gekoppelt sind, wodurch ebenso ein Zwei-Steg-Vier-Wellen-Getriebe ausgebildet wird. Das zusammengefasste Hohlrad des dritten und vierten Planetenradsatzes ist dabei ständig drehfest festgesetzt, indem es mit dem Gehäuse oder einem anderen drehfesten Bauelement des Getriebes verbunden ist. Der Steg des dritten Planetenradsatzes und der Steg des vierten Planetenradsatzes sind Bestandteile jener Vorschaltradsatzwelle, welche dazu eingerichtet ist die verringerte Drehzahl bereitzustellen. Ein Sonnenrad des vierten Planetenradsatzes ist ständig mit der Antriebswelle verbunden. Ein Sonnenrad des dritten Planetenradsatzes ist ständig mit dem Rotor der elektrischen Maschine verbunden. Auch diese Ausbildung des Vorschaltradsatzes zeichnet sich durch eine gute Zugänglichkeit zu den Vorschaltradsatzwellen aus. Besonders die drehfeste Festsetzung des zusammengefassten Hohlrads führt zu einer einfachen Baubarkeit des Getriebes.

Gemäß einer weiteren Ausführungsform sind der dritte und vierte Planetenradsatz des Vorschaltradsatz durch Minus-Radsätze gebildet, wobei der vierte Planetenradsatz radial innerhalb des dritten Planetenradsatzes angeordnet ist und ein Sonnenrad des dritten Planetenradsatzes am Außendurchmesser eines Hohlrads des vierten Planetenradsatzes ausgebildet ist. Der Steg des dritten Planetenradsatzes ist mit dem Steg des vierten Planetenradsatzes verbunden. Das Hohlrad des dritten Planetenradsatzes ist mit der Antriebswelle ständig verbunden. Der Steg des dritten Planetenradsatzes ist Bestandteil jener Vorschaltradsatzwelle, welche dazu eingerichtet ist die verringerte Drehzahl bereitzustellen. Das Sonnenrad des vierten Planetenradsatzes ist mit dem Rotor der elektrischen Maschine ständig verbunden. Das Hohlrad des vierten Planetenradsatzes ist ständig drehfest festgesetzt, indem es mit dem Gehäuse oder einem anderen drehfesten Bauelement des Getriebes ständig verbunden ist. Auch diese Ausbildung des Vorschaltradsatzes zeichnet sich durch eine gute Zugänglichkeit zu den Vorschaltradsatzwellen aus. Durch die Anordnung des vierten Planetenradsatzes radial innerhalb dritten Planetenradsatzes ist der axiale Bauraumbedarf dieser Ausführungsform besonders gering.

Gemäß einer Ausführungsform ist der Hauptradsatz als Ravigneaux-Radsatz mit zusammengefasstem Hohlrad ausgebildet. Ein Sonnenrad des als Minus-Radsatz ausgebildeten ersten Planetenradsatzes bildet einen Bestandteil der ersten Welle des Hauptradsatzes. Die Stege des ersten und zweiten Planetenradsatzes sind Bestandteile der zweiten Welle des Hauptradsatzes. Das zusammengefasste Hohlrad des ersten und zweiten Planetenradsatzes bildet einen Bestandteil der dritten Welle des Hauptradsatzes. Ein Sonnenrad des als Plus-Radsatz ausgebildeten zweiten Planetenradsatzes bildet einen Bestandteil der vierten Welle des Hauptradsatzes. Diese Ausführung des Hauptradsatzes zeichnet sich durch einen guten Wirkungsgrad, eine einfache Baubarkeit und durch eine gute Zugänglichkeit zu den vier Hauptradsatzwellen aus.

Gemäß einer weiteren Ausführungsform sind erster und zweiter Planetenradsatz des Hauptradsatzes als Minus-Radsätze mit doppelter Steg-Hohlrad-Kopplung ausgebildet. Das Sonnenrad des ersten Planetenradsatzes ist Bestandteil der ersten Welle des Hauptradsatzes. Der Steg des ersten Planetenradsatzes und das Hohlrad des zweiten Planetenradsatzes sind Bestandteile der zweiten Welle des Hauptradsatzes. Das Hohlrad des ersten Planetenradsatzes und der Steg des zweiten Planetenradsatzes sind Bestandteile der dritten Welle des Hauptradsatzes. Das Sonnenrad des zweiten Planetenradsatzes ist Bestandteil der vierten Welle des Hauptradsatzes. Auch diese Ausführung des Hauptradsatzes zeichnet sich durch einen guten Wirkungsgrad, eine einfache Baubarkeit und durch eine gute Zugänglichkeit zu den vier Hauptradsatzwellen aus.

Gemäß einer weiteren Ausführungsform sind erster und zweiter Planetenradsatz des Hauptradsatzes als Minus-Radsätze ausgebildet, wobei der zweite Planetenradsatz radial innerhalb des ersten Planetenradsatzes angeordnet ist und das Sonnenrad des ersten Planetenradsatzes am Außendurchmesser des Hohlrades des zweiten Planetenradsatzes ausgebildet ist. Das Sonnenrad des ersten Planetenradsatzes ist Bestandteil der ersten Welle des Hauptradsatzes. Der Steg des ersten Planetenradsatzes und der Steg des zweiten Planetenradsatzes sind miteinander verbunden, und sind Bestandteile der zweiten Welle des Hauptradsatzes. Das Hohlrad des ersten Planetenradsatzes ist Bestandteil der dritten Welle des Hauptradsatzes. Das Sonnenrad des zweiten Planetenradsatzes ist Bestandteil der vierten Welle des Hauptradsatzes. Diese Ausführungsform des Hauptradsatzes zeichnet sich durch einen besonders geringen axialen Bauraumbedarf aus.

Vorzugsweise weist das Getriebe eine Anschlusswelle auf, welche über ein sechstes Schaltelement mit der Antriebswelle des Getriebes verbindbar ist. Durch Öffnen des sechsten Schaltelements ist ein rein elektrischer Antrieb des Kraftfahrzeugs durch die elektrische Maschine des Getriebes möglich, ohne eine mit der Anschlusswelle verbundene Antriebseinheit mitzuschleppen. Das sechste Schaltelement kann als kraftschlüssiges oder als formschlüssiges Schaltelement ausgebildet sein.

Das Getriebe kann eine zweite elektrische Maschine aufweisen, dessen Rotor mit der Anschlusswelle ständig verbunden ist. Dadurch kann die Funktionalität des Getriebes weiter gesteigert werden, beispielsweise um einen Start eines mit der Anschlusswelle verbundenen Antriebsaggregates zu ermöglichen während das sechste Schaltelement geöffnet ist.

Das Getriebe kann Bestandteil eines Hybridantriebsstrangs eines Kraftfahrzeugs sein. Der Hybridantriebsstrang weist neben dem Getriebe auch eine Verbrennungskraftmaschine auf, welche über einen Torsionsschwingungsdämpfer mit der Anschlusswelle des Getriebes verbunden ist. Die Abtriebswelle des Getriebes ist mit einem Abtrieb verbunden, welcher mit Rädern des Kraftfahrzeugs verbunden ist. Der Hybridantriebsstrang ermöglicht mehrere Antriebsmodi des Kraftfahrzeugs. In einem elektrischen Fahrbetrieb wird das Kraftfahrzeug von der elektrischen Maschine des Getriebes angetrieben, wobei das sechste Schaltelement geöffnet ist. In einem verbrennungsmotorischen Betrieb wird das Kraftfahrzeug von der Verbrennungskraftmaschine angetrieben, wobei das sechste Schaltelement geschlossen ist. In einem hybridischen Betrieb wird das Kraftfahrzeug sowohl von der Verbrennungskraftmaschine als auch von der elektrischen Maschine des Getriebes angetrieben.

Eine elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Durch Schaltelemente wird, je nach Betätigungszustand, eine Relativbewegung zwischen zwei Bauteilen zugelassen oder eine Verbindung zur Übertragung eines Drehmoments zwischen den zwei Bauteilen hergestellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in entgegengesetzter Richtung rotiert.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Ausführungsbeispiele der Erfindung sind nachfolgend anhand der beigefügten Figuren detailliert beschrieben.
- Fig. 1: zeigt schematisch ein Getriebe entsprechend eines ersten Ausführungsbeispiels der Erfindung.
- Fig. 2: zeigt schematisch ein Getriebe entsprechend eines zweiten Ausführungsbeispiels der Erfindung.
- Fig. 3: zeigt schematisch ein Getriebe entsprechend eines dritten Ausführungsbeispiels der Erfindung.
- Fig. 4: zeigt schematisch ein Getriebe entsprechend eines vierten Ausführungsbeispiels der Erfindung.
- Fig. 5: zeigt schematisch ein Getriebe entsprechend eines fünften Ausführungsbeispiels der Erfindung.
- Fig. 6: zeigt einen Drehzahlplan der ersten und fünften Ausführungsbeispiels des Getriebes.
- Fig. 7: zeigt einen Drehzahlplan der zweiten bis vierten Ausführungsbeispiels des Getriebes.
- Fig. 8: zeigt ein Schaltschema des Getriebes.
- Fig. 9: zeigt einen Hybridantriebstrang eines Kraftfahrzeugs.

Fig. 1 zeigt schematisch ein Getriebe G für ein Kraftfahrzeug entsprechend eines ersten Ausführungsbeispiels der Erfindung. Das Getriebe G weist eine Antriebswelle GW1, eine Abtriebswelle GW2, eine elektrische Maschine EM mit einem drehfesten Stator S und einem drehbaren Rotor R, einen Hauptradsatz HRS mit einem ersten und zweiten Planetenradsatz P1, P2 sowie einen Vorschaltradsatz VRS mit einem dritten und vierten Planetenradsatz P3, P4 auf.

Der Vorschaltradsatz VRS ist als Ravigneaux-Radsatz mit zusammengefasstem Hohlrad E33, E34 ausgebildet. Der Rotor R ist mit einem Sonnenrad E13 des als Minus-Radsatz ausgebildeten dritten Planetenradsatzes P3 ständig verbunden. Die Antriebswelle GW1 ist mit dem gemeinsamen Steg E23, E24 des dritten und vierten Planetenradsatzes P3, P3 ständig verbunden. Das Sonnenrad E14 des als Plus-Radsatz ausgebildeten vierten Planetenradsatzes P4 ist ständig drehfest festgesetzt, indem es mit einem Gehäuse GG oder mit einem anderen drehfesten Bauelement des Getriebes G ständig verbunden ist. Durch diese Anbindung ergeben sich feste Drehzahlverhältnisse zwischen Antriebswelle GW1, Rotor R und dem zusammengefassten Hohlrad E33, E34, welche von den Standgetriebeübersetzungen des dritten und vierten Planetenradsatzes P3, P4 abhängen. Die Drehzahl n1 des Rotors liegt dabei stets höher als die Drehzahl n0 der Antriebswelle GW1. Die Drehzahl n2 des zusammengefassten Hohlrads E33, E34 liegt dabei stets unterhalb der Drehzahl n0 der Antriebswelle GW1.

Der Hauptradsatz HRS ist ebenso als Ravigneaux-Radsatz mit zusammengefasstem Hohlrad E31, E32 ausgebildet. Der Hauptradsatz HRS weist insgesamt vier Wellen auf, welche gemäß ihrer Reihenfolge in Drehzahlordnung als erste, zweite, dritte und vierte Welle W1, W2, W3, W4 bezeichnet sind. Ein Sonnenrad E11 des als Minus-Radsatz ausgebildeten ersten Planetenradsatzes P1 ist Bestandteil der ersten Welle W1 des Hauptradsatzes HRS. Ein Steg E21 und ein Steg E22 des ersten und zweiten Planetenradsatzes P1, P2 sind Bestandteile der zweiten Welle W2 des Hauptradsatzes HRS. Das zusammengefasste Hohlrad E31, E32 ist Bestandteil der dritten Welle W3 des Hauptradsatzes HRS. Ein Sonnenrad E12 des als Plus-Radsatz ausgebildeten zweiten Planetenradsatzes P2 ist Bestandteil der vierten Welle W4 des Hauptradsatzes HRS. Die dritte Welle W3 des Hauptradsatzes HRS ist ständig mit der Abtriebswelle GW2 verbunden.

Das Getriebe G weist insgesamt fünf Schaltelemente auf, nämlich ein erstes Schaltelement A, ein zweites Schaltelement B, ein drittes Schaltelement C, ein viertes Schaltelement D und ein fünftes Schaltelement E. Durch Schließen des ersten Schaltelements A ist jene Welle des Vorschaltradsatzes VRS, an der die im Vergleich zur Drehzahl der Antriebswelle GW1 reduzierte Drehzahl n2 bereitgestellt ist, mit der vierten Welle W4 des Hauptradsatzes verbindbar. Das erste Schaltelement A befindet sich also in der Wirkverbindung zwischen dem zusammengefassten Hohlrad E33, E34 des Vorschaltradsatzes VRS und dem Sonnenrad E12 des zweiten Planetenradsatzes P2 des Hauptradsatzes HRS. Durch Schließen des zweiten Schaltelements B ist jene Vorschaltradsatzwelle, an der die reduzierte Drehzahl n2 anliegt, mit der ersten Welle W1 des Hauptradsatzes HRS verbindbar. Durch Schließen des dritten Schaltelements C ist die erste Welle W1 des Hauptradsatzes HRS drehfest festsetzbar. Durch Schließen des vierten Schaltelements D ist die zweite Welle W2 des Hauptradsatzes HRS drehfest festsetzbar. Durch Schließen des fünften Schaltelements E ist die Antriebswelle GW1 mit der zweiten Welle W2 des Hauptradsatzes HRS verbindbar.

Erstes bis viertes Schaltelement A-D sind axial zwischen dem Vorschaltradsatz VRS und dem Hauptradsatz HRS angeordnet, und zwar in der axialen Reihenfolge erstes Schaltelement A, zweites Schaltelement B, drittes Schaltelement C, viertes Schaltelement D, ausgehend vom Vorschaltradsatz VRS. Dabei führt keine Welle des Getriebes G radial außerhalb des ersten bis vierten Schaltelements A-D, wodurch diese Schaltelemente A-D für Betätigungsvorrichtungen von radial außen gut zugänglich sind.

Die fünf Schaltelemente A, B, C, D, E sind schematisch in Form von kraftschlüssigen Schaltelementen dargestellt. Dies ist jedoch nicht limitierend anzusehen. Eine Auswahl der fünf Schaltelemente A, B, C, D, E kann auch als Klauenschaltelemente ausgebildet sein, insbesondere das erste Schaltelement A und das vierte Schaltelement D. Dies gilt für sämtliche Ausführungsbeispiele.

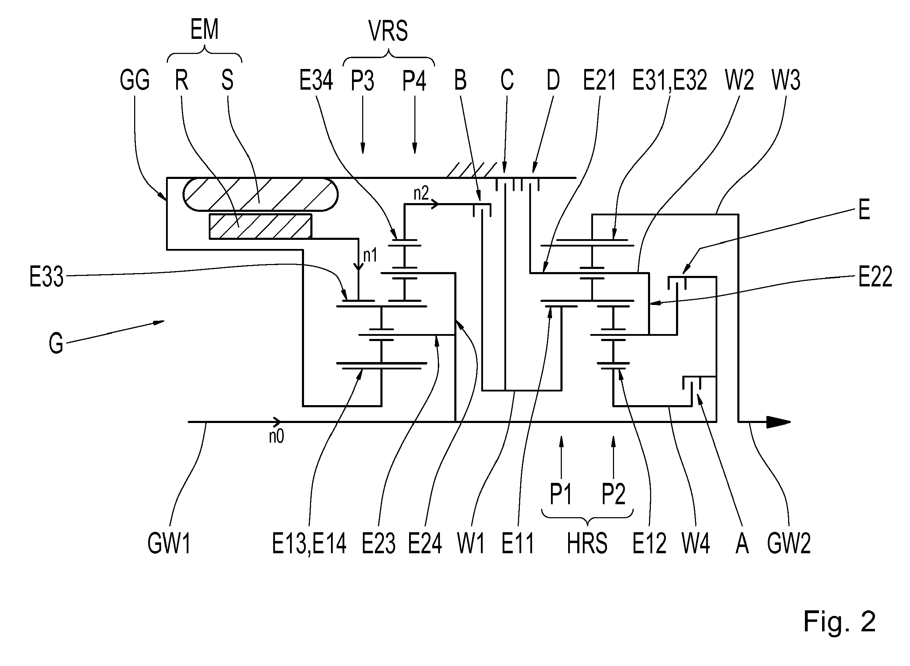

Fig. 2 zeigt schematisch ein Getriebe G für ein Kraftfahrzeug entsprechend eines zweiten Ausführungsbeispiels der Erfindung. Im Unterschied zum ersten Ausführungsbeispiel ist der Vorschaltradsatz VRS nun als Ravigneaux-Radsatz mit zusammengefasstem Sonnenrad E13, E14 aufgebaut. Zusätzlich wird durch Schließen des fünften Schaltelements A nun die Antriebswelle GW1 mit der vierten Welle W4 des Hauptradsatzes HRS verbunden. Das zusammengefasste Sonnenrad E13, E14 ist ständig drehfest festgesetzt. Die Antriebswelle GW1 ist mit dem gemeinsamen Steg E23, E24 des dritten und vierten Planetenradsatzes P3, P4 ständig verbunden. Das Hohlrad des als Minus-Radsatz ausgebildeten dritten Planetenradsatzes P3 ist mit dem Rotor R ständig verbunden. Das Hohlrad E34 des als Plus-Radsatzes ausgebildeten vierten Planetenradsatzes P4 ist Bestandteil jener Welle, an der die im Vergleich zur Drehzahl n0 der Antriebswelle GW1 reduzierte Drehzahl n2 bereitgestellt wird.

Im Getriebe G gemäß dem zweiten Ausführungsbeispiel kann das erste Schaltelement A radial innerhalb des fünften Schaltelements E angeordnet werden. Dadurch wird der axiale Bauraumbedarf des gesamten Getriebes G reduziert. Ist das erste Schaltelement A als formschlüssiges Schaltelement ausgebildet, so ist die radiale Nähe zur Zentralachse des Getriebes G besonders vorteilhaft, da formschlüssige Schaltelemente bevorzugt mit geringem Durchmesser auszuführen sind.

Die Unterschiede zwischen erstem und zweitem Ausführungsbeispiel sind unabhängig voneinander. Beispielsweise könnte das erste Schaltelement A auch bei einem Vorschaltradsatz VRS gemäß Fig. 1 in der Wirkverbindung zwischen Antriebswelle GW1 und vierter Welle W4 des Hauptradsatzes HRS angeordnet sein, bzw. könnte das erste Schaltelement A bei einem Vorschaltradsatz VRS gemäß Fig. 2 auch in der Wirkverbindung zwischen der vierten Welle W4 des Hauptradsatzes HRS und dem Hohlrad E34 des vierten Planetenradsatzes P4 angeordnet sein.

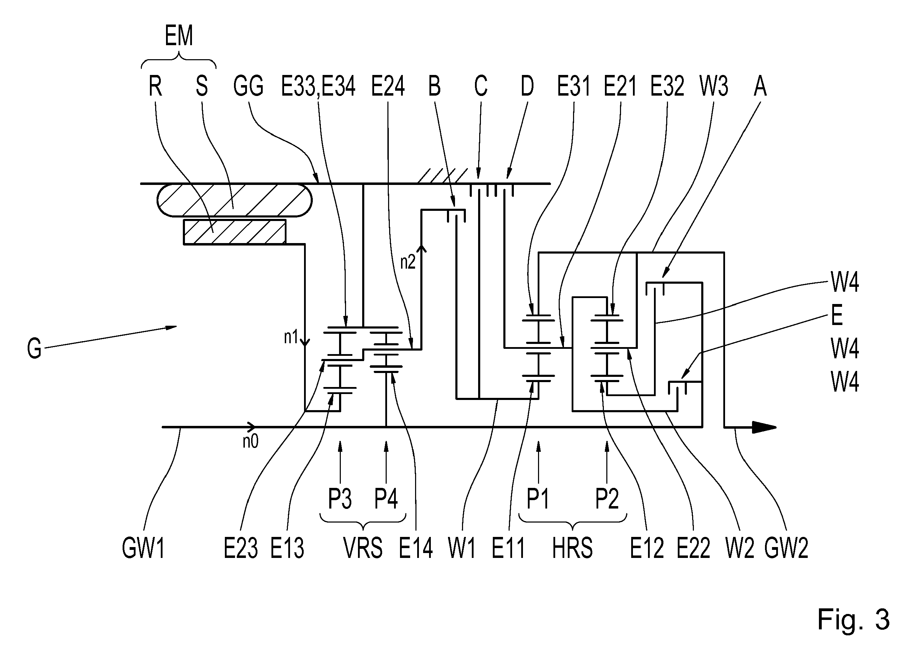

Fig. 3 zeigt schematisch ein Getriebe G für ein Kraftfahrzeug entsprechend eines dritten Ausführungsbeispiels der Erfindung. Im Unterschied zu den vorangegangenen Ausführungsbeispielen ist im dritten Ausführungsbeispiel weder der Vorschaltradsatz VRS noch der Hauptradsatz HRS als Ravigneaux-Radsatz ausgebildet. Dritter und vierter Planetenradsatz P3, P4 sind nun als Minus-Radsätze mit zusammengefasstem Hohlrad E33, E34 ausgebildet, wobei der Steg E23 des dritten Planetenradsatzes P3 mit dem Steg E24 des vierten Planetenradsatzes P4 ständig verbunden ist. Das Sonnenrad E13 des dritten Planetenradsatzes P3 ist mit dem Rotor R ständig verbunden. Das Sonnenrad E14 des vierten Planetenradsatzes P4 ist mit der Antriebswelle GW1 ständig verbunden. Das zusammengefasste Hohlrad E33, E34 ist ständig drehfest festgesetzt. Am Steg E23 und Steg 24 bildet sich somit eine im Vergleich zur Drehzahl der Antriebswelle n0 reduzierte Drehzahl n2 aus. Im Getriebe G gemäß dem dritten Ausführungsbeispiel wird durch Schließen des ersten Schaltelements A eine drehfeste Verbindung zwischen der vierten Welle W4 des Hauptradsatzes HRS und der Antriebswelle GW1 hergestellt.

Erster und zweiter Planetenradsatz P1, P2 des Hauptradsatzes HRS sind gemäß dem dritten Ausführungsbeispiel als zwei Minus-Planetenradsätze mit einer doppelten Steg-Hohlrad-Kopplung ausgebildet. Das Sonnenrad E11 des ersten Planetenradsatzes P1 ist Bestandteil der ersten Welle W1 des Hauptradsatzes HRS. Der Steg E21 des ersten Planetenradsatzes P1 und das Hohlrad E32 des zweiten Planetenradsatzes P2 sind ständig miteinander verbunden und sind Bestandteile der zweiten Welle W2 des Hauptradsatzes HRS. Das Hohlrad E31 des ersten Planetenradsatzes P1 und der Steg E22 des zweiten Planetenradsatzes P2 sind ständig miteinander verbunden und bilden Bestandteile der dritten Welle W3 des Hauptradsatzes HRS. Das Sonnenrad E12 des zweiten Planetenradsatzes P2 ist Bestandteil der vierten Welle W4 des Hauptradsatzes HRS.

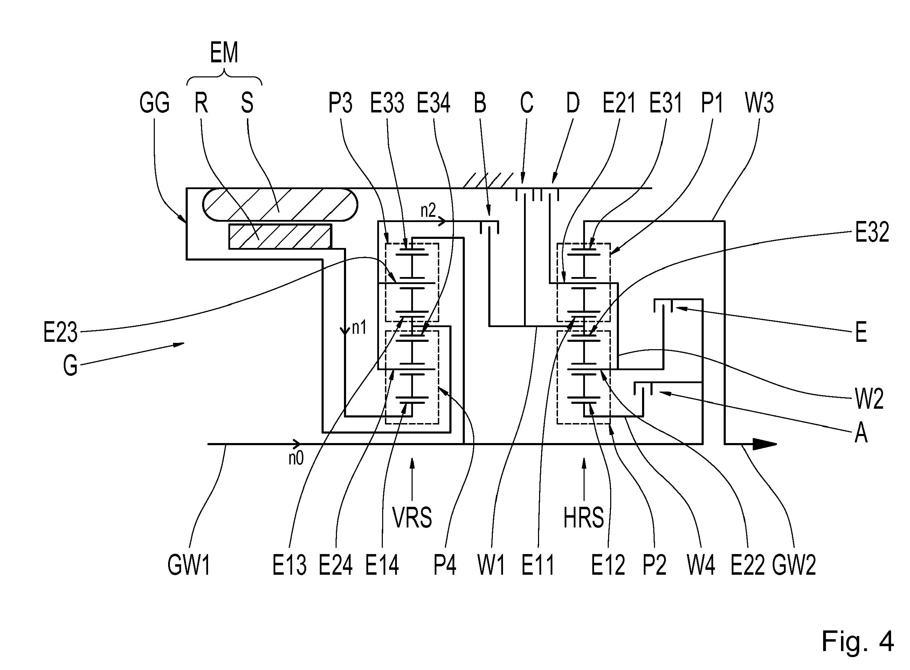

Fig. 4 zeigt schematisch ein Getriebe G für ein Kraftfahrzeug entsprechend eines vierten Ausführungsbeispiels der Erfindung. Im Unterschied zu den vorangegangenen Ausführungsbeispielen sind die Planetenradsätze P1, P2 des Hauptradsatzes HRS in einer gemeinsamen Radsatzebene angeordnet. Die Planetenradsätze P3, P4 des Vorschaltradsatzes VRS sind ebenfalls in einer gemeinsamen Radsatzebene angeordnet.

Der vierte Planetenradsatz P4 ist radial innerhalb des dritten Planetenradsatzes P3 angeordnet, wobei das Sonnenrad E13 des dritten Planetenradsatzes P3 am Außendurchmesser des Hohlrades E34 des vierten Planetenradsatzes P4 ausgebildet, und dabei ständig drehfest festgesetzt ist. Das Sonnenrad E14 des vierten Planetenradsatzes P4 ist mit dem Rotor R ständig verbunden. Der Steg E24 des vierten Planetenradsatzes P4 und der Steg E23 des dritten Planetenradsatzes P3 sind miteinander verbunden. Das Hohlrad E33 des dritten Planetenradsatzes P3 ist mit der Antriebswelle GW1 ständig verbunden. Dadurch bildet sich an den Stegen E23, E24 des dritten und vierten Planetenradsatzes P3, P4 eine im Vergleich zur Drehzahl n0 der Antriebswelle GW1 reduzierte Drehzahl n2 aus.

Der zweite Planetenradsatz P2 ist radial innerhalb des ersten Planetenradsatzes P1 angeordnet, wobei das Sonnenrad E11 des ersten Planetenradsatzes P1 am Außendurchmesser des Hohlrades E32 des zweiten Planetenradsatzes P2 ausgebildet ist. Der Steg E21 des ersten Planetenradsatzes P1 ist mit dem Steg E22 des zweiten Planetenradsatzes P2 ständig verbunden. Das Sonnenrad E11 des ersten Planetenradsatzes P1 ist Bestandteil der ersten Welle W1 des Hauptradsatzes HRS. Die Stege E21, E22 des ersten und zweiten Planetenradsatzes P1, P2 sind Bestandteile der zweiten Welle W2 des Hauptradsatzes HRS. Das Hohlrad E31 des ersten Planetenradsatzes P1 ist Bestandteil der dritten Welle W3 des Hauptradsatzes HRS. Das Sonnenrad E12 des zweiten Planetenradsatzes P2 ist Bestandteil der vierten Welle W4 des Hauptradsatzes HRS.

Im Getriebe G gemäß dem vierten Ausführungsbeispiel wird durch Schließen des ersten Schaltelements A eine drehfeste Verbindung zwischen der Antriebswelle GW1 und der vierten Welle W4 des Hauptradsatzes HRS hergestellt.

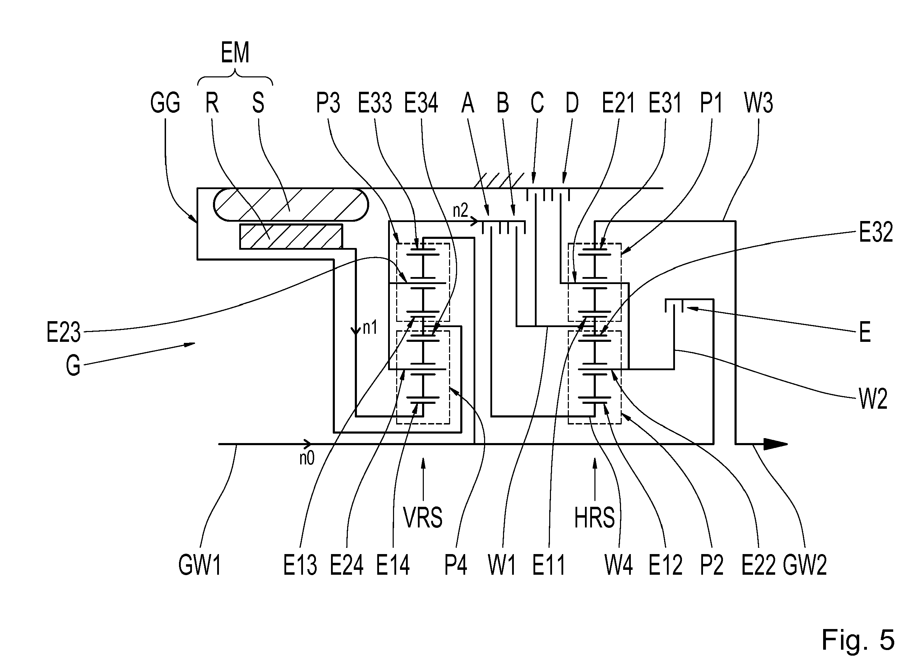

Fig. 5 zeigt schematisch ein Getriebe G für ein Kraftfahrzeug entsprechend eines fünften Ausführungsbeispiels der Erfindung. Das fünfte Ausführungsbeispiel entspricht im Wesentlichen dem vierten Ausführungsbeispiel. Der einzige Unterschied besteht hinsichtlich des ersten Schaltelements A. Durch Schließen des ersten Schaltelements A wird eine drehfeste Verbindung zwischen der vierten Welle W4 des Hauptradsatzes HRS und jener Vorschaltradsatzwelle hergestellt, an der die im Vergleich zu Drehzahl n0 der Antriebswelle GW1 reduzierte Drehzahl n2 anliegt.

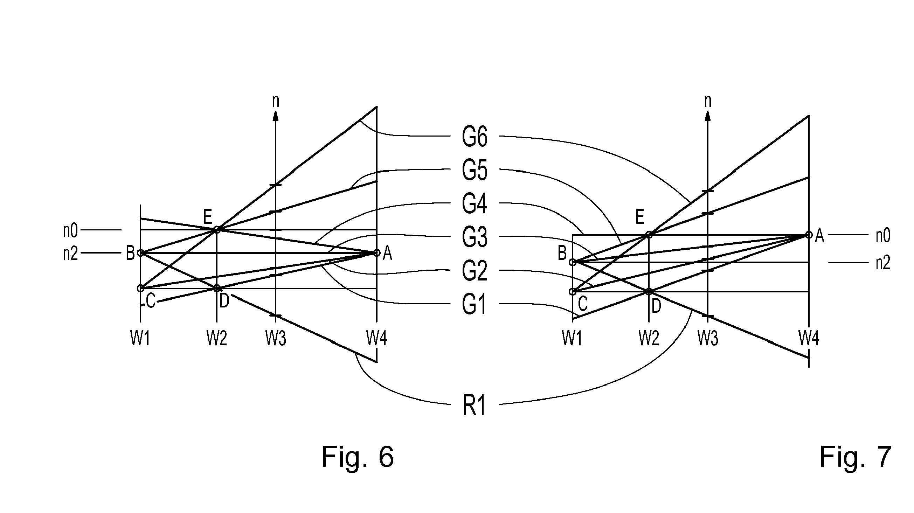

Fig. 6 zeigt einen Drehzahlplan des ersten und fünften Ausführungsbeispiels des Getriebes G. Fig. 7 zeigt einen Drehzahlplan des zweiten bis vierten Ausführungsbeispiels. Im Drehzahlplan sind in vertikaler Richtung die Drehzahlen der vier Wellen W1, W2, W3, W4 des Hauptradsatzes HRS im Verhältnis zur Drehzahl n0 der Antriebswelle GW1 aufgetragen. Die maximal auftretende Drehzahl n0 der Antriebswelle GW1 ist auf den Wert Eins normiert. Die Abstände zwischen den vier Wellen W1, W2, W3, W4 des Hauptradsatzes HRS ergeben sich durch die Standgetriebeübersetzungen des ersten und zweiten Planetenradsatzes. Die Darstellung dient nur zur Anschauung und ist nicht maßstäblich. Zu einem bestimmten Betriebspunkt gehörende Drehzahlverhältnisse lassen sich durch eine Gerade verbinden.

Werden zwei der vier Wellen W1, W2, W3, W4 miteinander verbunden, so drehen diese miteinander verbundenen Wellen mit derselben Drehzahl. Der Übersichtlichkeit halber können derart verbundene Wellen im Drehzahlplan horizontal getrennt voneinander dargestellt sein. Der dabei im Drehzahlplan gewählte horizontale Abstand zwischen den derart verbundenen Wellen ist willkürlich. Die Übersetzung zwischen derart verbundenen Wellen beträgt selbstverständlich den Wert Eins, unabhängig vom im Drehzahlplan gewählten horizontalen Abstand.

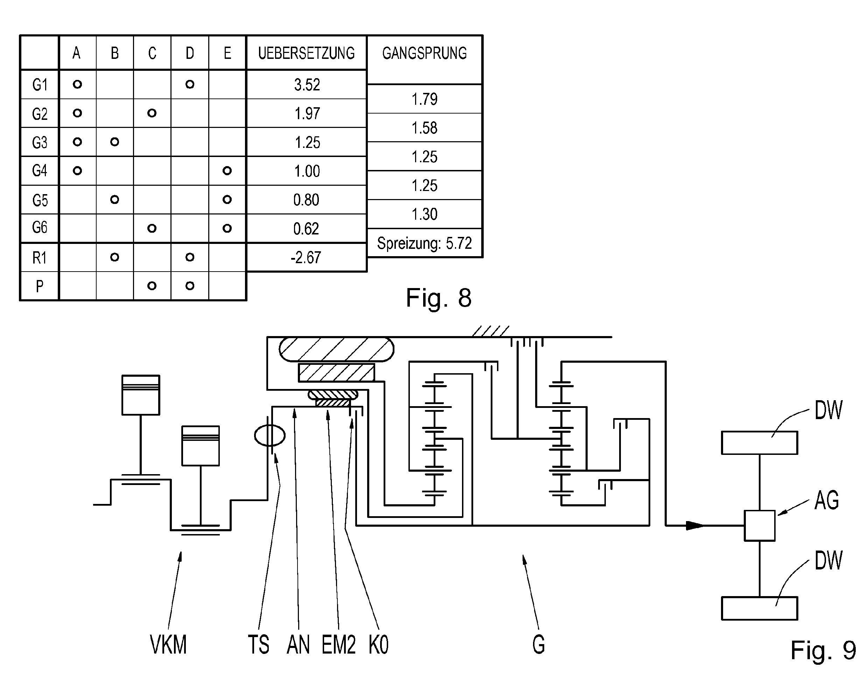

Fig. 8 zeigt ein Schaltschema des Getriebes G, welches für sämtliche Ausführungsbeispiele gilt. In den Zeilen des Schaltschemas sind sechs Vorwärtsgänge G1 bis G6, ein Rückwärtsgang R1, sowie eine Parksperre P angegeben. In den Spalten des Schaltschemas ist durch einen Kreis angegeben, welche Schaltelemente A, B, C, D, E, in welchem Gang, bzw. Betriebsmodus geschlossen sind. Durch das Schaltschema in Fig. 8 und die Drehzählplane in Fig. 6 und Fig. 7 wird die Funktionsweise des Getriebes G deutlich.

In dem in Fig. 8 dargestellten Schaltschema sind beispielhaft die Übersetzungsverhältnisse zwischen der Antriebswelle GW1 und der Abtriebswelle GW2 dargestellt, wie sie sich aus einem Getriebe G gemäß dem vierten Ausführungsbeispiel ergeben. Die dazu verwendeten Standgetriebeübersetzungen lauten wie folgt: erster Planetenradsatz P1: -1,6, zweiter Planetenradsatz P2: -2,2, dritter Planetenradsatz P3: -1,5, vierter Planetenradsatz P4: -2,0. Eine derartige Übersetzungsreihe ist für die Anwendung des Getriebes G im Kraftfahrzeug gut geeignet.

Sind sowohl das dritte Schaltelement C als auch das vierte Schaltelement D als formschlüssige Klauenschaltelemente ausgebildet, kann durch Schließen beider dieser Schaltelemente eine Parksperre P realisiert werden. Denn durch drehfestes Festsetzen zweier Wellen des Hauptradsatzes HRS, in diesem Fall das Festsetzen der ersten Welle W1 und der zweiten Welle W2, ist auch die Abtriebswelle GW2 drehfest festgesetzt. Vorzugsweise sind dabei das dritte und vierte Schaltelement C, D so ausgebildet, dass diese im energielosen Zustand ihren Schaltzustand sicher beibehalten.

Fig. 9 zeigt einen Hybridantriebstrang eines Kraftfahrzeugs mit einem Getriebe G gemäß dem vierten Ausführungsbeispiel. Dies ist lediglich beispielhaft anzusehen. Der Hybridantriebsstrang könnte mit jedem der angeführten Ausführungsbeispiele des Getriebes G ausgeführt sein. Der Hybridantriebsstrang weist eine Verbrennungskraftmaschine VKM auf, die über einen Torsionsschwingungsdämpfer TS mit der Anschlusswelle AN des Getriebes G verbunden ist. Die Anschlusswelle AN ist über ein sechstes Schaltelement K0 mit der Antriebswelle GW1 des Getriebes G verbindbar. Die Abtriebswelle GW2 ist mit einem Achsgetriebe AG antriebswirkverbunden. Vom Achsgetriebe AG ausgehend wird die Leistung, die an der Abtriebswelle GW2 anliegt, auf Räder DW des Kraftfahrzeugs verteilt. Im motorischen Betrieb der elektrischen Maschine EM wird dem Stator S über einen nicht dargestellten Wechselrichter elektrische Leistung zugeführt. Im generatorischen Betrieb der elektrischen Maschine EM führt der Stator S dem Wechselrichter elektrische Leistung zu. In einem weiteren Betriebsmodus kann die elektrische Maschine EM dazu verwendet werden, einen Energiespeicher des Kraftfahrzeugs im Stillstand des Kraftfahrzeugs aufzuladen. Dazu ist das sechste Schaltelement K0 zu schließen, wobei maximal eines der fünf Schaltelemente A-E geschlossen sein darf. Somit kann die Verbrennungskraftmaschine VKM die elektrische Maschine EM antreiben, ohne Leistung auf die Abtriebswelle GW2 zu übertragen.

Das in Fig. 9 dargestellte Getriebe G weist zusätzlich eine zweite elektrische Maschine EM2 auf, deren Rotor drehfest mit der Anschlusswelle AN verbunden ist. Die zweite elektrische Maschine EM2 ist optional vorgesehen. Durch die zweite elektrische Maschine EM kann die Verbrennungskraftmaschine VKM gestartet werden, auch wenn das sechste Schaltelement K0 geöffnet ist. Bei geschlossenem sechstem Schaltelement K0 kann die zweite elektrische Maschine EM2 auch zum Antrieb des Kraftfahrzeugs betragen. Eine solche zweite elektrische Maschine EM2 kann bei jedem Ausführungsbeispiel des Getriebes G verwendet werden. Die zweite elektrische Maschine EM2 kann auch außerhalb des Getriebes G angeordnet sein, beispielsweise in Form eines Riemen-Startergenerators an der Verbrennungskraftmaschine VKM.

### Bezugszeichen

- G: Getriebe
- GW1: Antriebswelle
- GW2: Abtriebswelle
- AN: Anschlusswelle
- GG: Gehäuse
- EM: Elektrische Maschine
- S: Stator
- R: Rotor
- VRS: Vorschaltradsatz
- HRS: Hauptradsatz
- W1: Erste Welle des Hauptradsatzes
- W2: Zweite Welle des Hauptradsatzes
- W3: Dritte Welle des Hauptradsatzes
- W4: Vierte Welle des Hauptradsatzes
- n0: Drehzahl der Antriebswelle
- n1: Erhöhte Drehzahl
- n2: Reduzierte Drehzahl
- P1: Erster Planetenradsatz
- E11: Sonnenrad des ersten Planetenradsatzes
- E21: Steg des ersten Planetenradsatzes
- E31: Hohlrad des ersten Planetenradsatzes
- P2: Zweiter Planetenradsatz
- E12: Sonnenrad des zweiten Planetenradsatzes
- E22: Steg des zweiten Planetenradsatzes
- E32: Hohlrad des zweiten Planetenradsatzes
- P3: Dritter Planetenradsatz
- E13: Sonnenrad des dritten Planetenradsatzes
- E23: Steg des dritten Planetenradsatzes
- E33: Hohlrad des dritten Planetenradsatzes
- P4: Vierter Planetenradsatz
- E14: Sonnenrad des vierten Planetenradsatzes
- E24: Steg des vierten Planetenradsatzes
- E34: Hohlrad des vierten Planetenradsatzes
- A: Erstes Schaltelement
- B: Zweites Schaltelement
- C: Drittes Schaltelement
- D: Viertes Schaltelement
- E: Fünftes Schaltelement
- K0: Sechstes Schaltelement
- G1-G6: Erster bis sechster Vorwärtsgang
- R1: Rückwärtsgang
- P: Parksperre
- VKM: Verbrennungskraftmaschine
- DW: Räder
- AG: Achsgetriebe
- TS: Torsionsschwingungsdämpfer
- EM2: Zweite elektrische Maschine

## Patentansprüche

1. Getriebe (G) für ein Kraftfahrzeug, mit einer Antriebswelle (GW1), einer Abtriebswelle (GW2), einem Vorschaltradsatz (VRS), einem Hauptradsatz (HRS), einer elektrischen Maschine (EM) mit einem drehbaren Rotor (R) und einem drehfesten Stator (S), sowie zumindest drei Schaltelemente (A, B, C, D, E),
- wobei der Hauptradsatz (HRS) durch einen ersten und einen zweiten Planetenradsatz (P1, P2) gebildet ist, welche zusammen insgesamt vier in Drehzahlordnung als erste, zweite, dritte, vierte Welle bezeichnete Wellen (W1, W2, W3, W4) aufweisen,
- wobei der Vorschaltradsatz (VRS) dazu eingerichtet ist, an einer seiner Wellen eine zur Drehzahl (n0) der Antriebswelle (GW1) erhöhte Drehzahl (n1) und an einer weiteren seiner Wellen eine zur Drehzahl (n0) der Antriebswelle (GW1) verringerte Drehzahl (n2) bereitzustellen, wobei zwischen den Drehzahlen (n0, n1, n2) feste Übersetzungsverhältnisse bestehen,
- wobei jene Welle des Vorschaltradsatzes (VRS), welche dazu eingerichtet ist die verringerte Drehzahl (n2) bereitzustellen, ein Bestandteil eines schaltbaren ersten Leistungspfades zu einer ersten der vier Wellen (W1, W2, W3, W4) des Hauptradsatzes (HRS) ist,
- wobei die Antriebswelle (GW1) ein Bestandteil eines schaltbaren zweiten Leistungspfades zu einer zweiten der vier Wellen (W1, W2, W3, W4) des Hauptradsatzes (HRS) ist,
- wobei durch selektives paarweises Eingreifen der Schaltelemente (A, B, C, D, E) die Drehzahlverhältnisse der vier Wellen (W1, W2, W3, W4) des Hauptradsatzes (HRS) bestimmbar sind, wodurch eine Mehrzahl von schaltbaren Vorwärtsgängen (G1-G6) zwischen der Antriebswelle (GW1) und der Abtriebswelle (GW2) erzeugbar sind,
**dadurch gekennzeichnet, dass**
- der Rotor (R) der elektrischen Maschine (EM) mit jener Welle des Vorschaltradsatzes (VRS) ständig verbunden ist, welche dazu eingerichtet ist die erhöhte Drehzahl (n1) bereitzustellen.

2. Getriebe (G) nach Anspruch 1, **dadurch gekennzeichnet, dass** das Getriebe (G) zur Erzeugung der Vorwärtsgänge (G1-G6) insgesamt fünf Schaltelemente (A, B, C, D, E) aufweist, wobei
- die erste Welle (W1) des Hauptradsatzes (HRS) über das dritte Schaltelement (C) drehfest festsetzbar ist und über das zweite Schaltelement (B) mit jener Welle des Vorschaltradsatzes (VRS) verbindbar ist, welche dazu eingerichtet ist die verringerte Drehzahl (n2) bereitzustellen,
- wobei die zweite Welle (W2) des Hauptradsatzes (HRS) über das vierte Schaltelement (D) drehfest festsetzbar ist und über das fünfte Schaltelement (E) mit der Antriebswelle (GW1) verbindbar ist,
- wobei die dritte Welle (W3) des Hauptradsatzes (HRS) mit der Abtriebswelle (GW2) ständig verbunden ist, und
- wobei die vierte Welle (W4) über das erste Schaltelement (A) entweder mit der Antriebswelle (GW1) oder mit jener Welle des Vorschaltradsatzes (VRS) verbindbar ist, welche dazu eingerichtet ist die verringerte Drehzahl (n2) bereitzustellen.

3. Getriebe (G) nach Anspruch 2 **dadurch gekennzeichnet, dass** sich
- ein erster Vorwärtsgang (G1) durch Schließen des ersten Schaltelements (A) und des vierten Schaltelements (D),
- ein zweiter Vorwärtsgang (G2) durch Schließen des ersten Schaltelements (A) und des dritten Schaltelements (C),
- ein dritter Vorwärtsgang (G3) durch Schließen des ersten Schaltelements (A) und des zweiten Schaltelements (B),
- ein vierter Vorwärtsgang (G4) durch Schließen des ersten Schaltelements (A) und des fünften Schaltelements (E),
- ein fünfter Vorwärtsgang (G5) durch Schließen des zweiten Schaltelements (B) und des fünften Schaltelements (E), und
- ein sechster Vorwärtsgang (G6) durch Schließen des dritten Schaltelements (C) und des fünften Schaltelements (E) ergibt.

4. Getriebe (G) nach Anspruch 2 oder Anspruch 3, **dadurch gekennzeichnet, dass** sich ein Rückwärtsgang (R1) durch Schließen des zweiten Schaltelements (B) und des vierten Schaltelements (D) ergibt.

5. Getriebe (G) nach einem der Ansprüche 2 bis 4, **dadurch gekennzeichnet, dass** das erste Schaltelement (A) als formschlüssiges Schaltelement, insbesondere als Klauenschaltelement ausgebildet ist.

6. Getriebe (G) nach einem der Ansprüche 2 bis 5, **dadurch gekennzeichnet, dass** das vierte Schaltelement (D) als Klauenschaltelement ausgebildet ist.

7. Getriebe (G) nach einem der vorangehenden Ansprüche, **dadurch gekennzeichnet, dass** der Vorschaltradsatz (VRS) einen dritten und vierten Planetenradsatz (P3, P4) aufweist, welche einen Ravigneaux-Radsatz mit zusammengefasstem Hohlrad (E33, E34) bilden,
- wobei ein Sonnenrad (E14) des als Plus-Radsatz ausgebildeten vierten Planetenradsatzes (P4) ständig drehfest festgesetzt ist,
- wobei ein gemeinsamer Steg (E23, E24) des dritten und vierten Planetenradsatzes (P3, P4) ständig mit der Antriebswelle (GW1) verbunden ist,
- wobei ein Sonnenrad (E13) des als Minus-Radsatz ausgebildeten dritten Planetenradsatzes (P3) mit dem Rotor (R) ständig verbunden ist, und
- wobei das zusammengefasste Hohlrad (E33, E34) des dritten und vierten Planetenradsatzes (P3, P4) Bestandteil jener Welle des Vorschaltradsatzes (VRS) ist, welche dazu eingerichtet ist die verringerte Drehzahl (n2) bereitzustellen.

8. Getriebe (G) nach einem der Ansprüche 1 bis 6, **dadurch gekennzeichnet, dass** der Vorschaltradsatz (VRS) einen dritten und vierten Planetenradsatz (P3, P4) aufweist, welche einen Ravigneaux-Radsatz mit zusammengefasstem Sonnenrad (E13, E14) bilden,
- wobei das zusammengefasste Sonnenrad (E13, E14) des dritten und vierten Planetenradsatzes (P3, P4) ständig drehfest festgesetzt ist,
- wobei ein Hohlrad (E34) des als Plus-Radsatz ausgebildeten vierten Planetenradsatzes (P4) Bestandteil jener Welle des Vorschaltradsatzes (VRS) ist, welche dazu eingerichtet ist die verringerte Drehzahl (n2) bereitzustellen,
- wobei ein gemeinsamer Steg (E23, E24) des dritten und vierten Planetenradsatzes (P3, P4) ständig mit der Antriebswelle (GW1) verbunden ist,
- wobei ein Hohlrad (E33) des als Minus-Radsatz ausgebildeten dritten Planetenradsatzes (P3) mit dem Rotor (R) ständig verbunden ist.

9. Getriebe (G) nach einem der Ansprüche 1 bis 6, **dadurch gekennzeichnet, dass** der Vorschaltradsatz (VRS) einen dritten und vierten Planetenradsatz (P3, P4) aufweist, welche als Minus-Radsätze ausgebildet sind,
- wobei das zusammengefasste Hohlrad (E33, E34) des dritten und vierten Planetenradsatzes (P3, P4) ständig drehfest festgesetzt ist,
- wobei der Steg (E23) des dritten Planetenradsatzes (P3) und der Steg (E24) des vierten Planetenradsatzes (P3, P4) miteinander verbunden und Bestandteile jener Welle des Vorschaltradsatzes (VRS) ist, welche dazu eingerichtet ist die verringerte Drehzahl (n2) bereitzustellen,
- wobei ein Sonnenrad (E14) des vierten Planetenradsatzes (P4) ständig mit der Antriebswelle (GW1) verbunden ist, und
- wobei ein Sonnenrad (E13) des dritten Planetenradsatzes (P3) mit dem Rotor (R) ständig verbunden ist.

10. Getriebe (G) nach einem der Ansprüche 1 bis 6, **dadurch gekennzeichnet, dass** der Vorschaltradsatz (VRS) einen dritten und vierten Planetenradsatz (P3, P4) aufweist, welche als Minus-Radsätze ausgebildet sind,
- wobei der vierte Planetenradsatz (P4) radial innerhalb des dritten Planetenradsatzes (P3) angeordnet ist und ein Sonnenrad (E13) des dritten Planetenradsatzes (P3) am Außendurchmesser eines Hohlrades (E34) des vierten Planetenradsatzes (P4) ausgebildet ist,
- wobei ein Hohlrad (E33) des dritten Planetenradsatzes (P3) mit der Antriebswelle (GW1) ständig verbunden ist,
- wobei der Steg (E23) des dritten Planetenradsatzes (P3) und der Steg (E24) des vierten Planetenradsatzes (P4) Bestandteile jener Welle des Vorschaltradsatzes (VRS) sind, welche dazu eingerichtet ist die verringerte Drehzahl (n2) bereitzustellen,
- wobei ein Sonnenrad (E14) des vierten Planetenradsatzes (P4) mit dem Rotor (R) ständig verbunden ist, und
- wobei das Hohlrad (E34) des vierten Planetenradsatzes (P4) ständig drehfest festgesetzt ist.

11. Getriebe (G) nach einem der vorangehenden Ansprüche, **dadurch gekennzeichnet, dass** der Hauptradsatz (HRS) als Ravigneaux-Radsatz mit zusammengefasstem Hohlrad (E31, E32) ausgebildet ist,
- wobei ein Sonnenrad (E11) des als Minus-Radsatz ausgebildeten ersten Planetenradsatzes (P1) Bestandteil der ersten Welle (W1) des Hauptradsatzes (HRS) ist,
- wobei ein gemeinsamer Steg (E21, E22) des ersten und zweiten Planetenradsatzes (P1, P2) Bestandteil der zweiten Welle (W2) des Hauptradsatzes (HRS) ist,
- wobei das zusammengefasste Hohlrad (E31, E32) des ersten und zweiten Planetenradsatzes (P1, P2) Bestandteil der dritten Welle (W3) des Hauptradsatzes (HRS) ist, und
- wobei ein Sonnenrad (E12) des als Plus-Radsatz ausgebildeten zweiten Planetenradsatzes (P2) Bestandteil der vierten Welle (W4) des Hauptradsatzes (HRS) ist.

12. Getriebe (G) nach einem der Ansprüche 1 bis 10, **dadurch gekennzeichnet, dass** der erste und zweite Planetenradsatz (P1, P2) des Hauptradsatzes (HRS) als Minus-Radsätze ausgebildet sind,
- wobei ein Sonnenrad (E11) des ersten Planetenradsatzes (P1) Bestandteil der ersten Welle (W1) des Hauptradsatzes (HRS) ist,
- wobei ein Steg (E21) des ersten Planetenradsatzes (P1) und ein Hohlrad (E32) des zweiten Planetenradsatzes (P2) Bestandteile der zweiten Welle (W2) des Hauptradsatzes (HRS) sind,
- wobei ein Hohlrad (E31) des ersten Planetenradsatzes (P1) und ein Steg (E22) des zweiten Planetenradsatzes (P2) Bestandteile der dritten Welle (W3) des Hauptradsatzes (HRS) sind, und
- wobei ein Sonnenrad (E12) des zweiten Planetenradsatzes (P2) Bestandteil der vierten Welle (W4) des Hauptradsatzes (HRS) ist.

13. Getriebe (G) nach einem der Ansprüche 1 bis 10, **dadurch gekennzeichnet, dass** der erste und zweite Planetenradsatz (P1, P2) des Hauptradsatzes (HRS) als Minus-Radsätze ausgebildet sind,
- wobei der zweite Planetenradsatz (P2) radial innerhalb des ersten Planetenradsatzes (P1) angeordnet ist und ein Sonnenrad (E11) des ersten Planetenradsatzes (P1) am Außendurchmesser eines Hohlrades (E32) des zweiten Planetenradsatzes (P2) ausgebildet ist,
- wobei das Sonnenrad (E11) des ersten Planetenradsatzes (P1) Bestandteil der ersten Welle (W1) des Hauptradsatzes (HRS) ist,
- wobei ein Steg (E21) des ersten Planetenradsatzes (P1) und ein Steg (E22) des zweiten Planetenradsatzes (P2) Bestandteile der zweiten Welle (W2) des Hauptradsatzes (HRS) sind,
- wobei ein Hohlrad (E31) des ersten Planetenradsatzes (P1) Bestandteil der dritten Welle (W3) des Hauptradsatzes (HRS) ist, und
- wobei ein Sonnenrad (E12) des zweiten Planetenradsatzes (P2) Bestandteil der vierten Welle (W4) des Hauptradsatzes (HRS) ist.

14. Getriebe (G) nach einem der vorangehenden Ansprüche, **dadurch gekennzeichnet, dass** das Getriebe (G) eine Anschlusswelle (AN) aufweist, welche über ein sechstes Schaltelement (K0) mit der Eingangswelle (GW1) verbindbar ist.

15. Hybridantriebsstrang für ein Kraftfahrzeug mit einem Getriebe (G) nach Anspruch 14.
